# EUROPEAN PATENT APPLICATION

(11) **EP 1 808 778 A1**
(43) Date of publication of application: **18.07.2007**
(21) Application number: 05077819.0
(22) Date of filing: 07.12.2005
(51) Int. Cl.: G06F 17/30

(54) **A method of navigation within a portal application, a system for navigating within a portal system, a user terminal and a computer readable storage medium**

(71) Applicant: SAP AG, 69190 Walldorf (DE)
(72) Inventor: Danninger, Michael, 76829 Landau (DE)
(74) Representative: Winckels, Johannes Hubertus F.

(57) **Abstract**

The invention relates to a method of navigating within a portal application, the portal application having one or more defined roles, wherein the one or more roles have one of a plurality of navigation schemes assigned to the role, wherein the navigation scheme navigates a user within the application in accordance with the assigned navigation scheme, the method comprising: receiving an input from a user, and switching, in response to the input from the user, from the one of the plurality of navigation schemes to another of the plurality of navigation schemes, so that the user is able to determine the navigation scheme to navigate within the application.

## Description

The invention relates to a method of navigating within a portal application, a system for navigating within a portal system, a user terminal and a computer readable storage medium.

In portal applications, such as SAP's portal applications, two types of users are distinguished: frequent (also referred to as professional) users and occasional (also referred to as self-service) users. For professional users, a navigation scheme is provided with the focus on efficiency. Typically, as a result, for profession users, screens are more complex than for self-service users. For self-service users, a navigation scheme is offered with an emphasis on user guidance, documentation and simplicity. Typically, as a result, for self-service users, screens have a low complexity. A problem with the conventional portal applications is that every professional user is once new to an application. Further, a user may be a professional user, but may not be a frequent user. In these cases, even a professional user would benefit from a navigation scheme that provides more user guidance, more documentation and less complexity.

On the other hand, a self-service user may use a self-service frequently, for example, time recording or travel planning, and therefore a navigation with the emphasis on user guidance and simplicity may not be appropriate and/or efficient.

Whilst it is known to provide different navigation schemes for different user types, a user is not able to switch between the different navigation schemes. It is also known to provide a help mode that displays step by step instructions, which can be switched on or off.

It is desirable to address those drawbacks identified in conventional systems. In particular, it is desirable to improve the navigation of portal applications.

To address the above mentioned problems, there is provided according to a first aspect of the invention, a method of navigating within a portal application, the portal application having one or more defined roles, wherein the one or more roles have one of a plurality of navigation schemes assigned to the role, wherein the navigation scheme navigates a user within the application in accordance with the assigned navigation scheme, the method comprising: interfacing with a user to receive an input from the user, and switching, in response to the input from the user, from the one of the plurality of navigation schemes to another of the plurality of navigation schemes, so that the user is able to determine the navigation scheme to navigate within the application.

In this way, a navigation scheme switch lays in the hand of the user, which type of portal navigation he would like to work with. It allows a user to switch between a self-service type navigation scheme, eg. including user guidance, documentation and simplicity) and a profession type navigation scheme, eg. efficient, higher screen complexity. Further, a more efficient navigation is achieved. For example, navigation may be faster. Further, faster round trips may be achieved. In this way, performance is increased. Typically, initial round trips in professional applications may take longer than self-service. This is because the screen complexity is larger, so there is more to transfer and to render. In corresponding self-service screens, fewer controls may be used, so the round trips are faster compared to complex screens. But, the number of round trips necessary to fulfil a task is overall higher, because self-services are divided into more steps (screens) and every step may require at least one round trip. So overall, according to an embodiment of the invention a task for a frequent user can be fulfilled faster/more efficiently because of a lower number of round trips which increases the overall performance of the user and system. In particular, the navigation scheme switch, according to an embodiment of the invention, is more than an enhanced help mode. According to an embodiment of the invention, the navigation elements themselves are presented in a more simple and self-descriptive way and therefore, provides improved user guidance. Once the user guidance is not desired by the user, he can readily switch to a more efficient and visually more complex navigation scheme. In this way, the usability of the portal navigation is improved.

In a preferred embodiment, the user type for a role is determined and the navigation scheme is determined in accordance with the user type, wherein the navigation scheme is provided as a default. In this way, whilst the system offers a default option, the user is able to switch readily between schemes.

In a preferred embodiment, the navigation scheme switch is a generic function. By providing generic function which may be valid for every portal role application in a portal application, for example, MySAP, regardless for which user type the application is designed for. In this way, the flexibility of the navigation in the portal application is improved.

According to a second aspect of the invention, there is provided a system for navigation within a portal application, the portal application having one or more defined roles, wherein the one or more roles have one of a plurality of navigation schemes assigned to the role, wherein the navigation scheme navigates a user within the application in accordance with the assigned navigation scheme, the system comprising:
a data storage device for storing the one or more roles together with the one of a plurality of navigation schemes assigned to the role,
a user interface coupled to the data storage unit, configured to respond to an input from a user to switch from the one of the plurality of navigation schemes to another of the plurality of navigation schemes, so that the user is able to determine the navigation scheme to navigate within the application.

According to a third aspect of the invention, there is provided a user terminal comprising means operable to perform the method of claims 1-9.

According to a fourth aspect of the invention, there is provided a computer readable storage medium storing a program which when run on a computer controls the computer to perform the method of claims 1-9.

By way of example only, embodiments of the present invention will now be described with reference to the accompanying figures in which:
Figure 1 shows a block diagram of a computer based system for navigating within a portal application according to an embodiment of the invention;
Figure 2 depicts a screen shot of a home page of a self-service navigation scheme according to an embodiment of the invention;
Figure 3 depicts a screen shot of a second level home page of a self-service navigation scheme according to an embodiment of the invention;
Figure 4 depicts a screen shot of a service launch in accordance with a self-service navigation scheme according to an embodiment of the invention;
Figure 5 depicts a screen shot of a home page of a professional navigation scheme according to an embodiment of the invention;
Figure 6 depicts a screen shot of a service launch in accordance with a professional navigation scheme according to an embodiment of the invention, and
Figure 7 depicts a screen shot indicating how a user can switch between navigation schemes in accordance with an embodiment of the invention.

Like reference numerals indicate like elements.

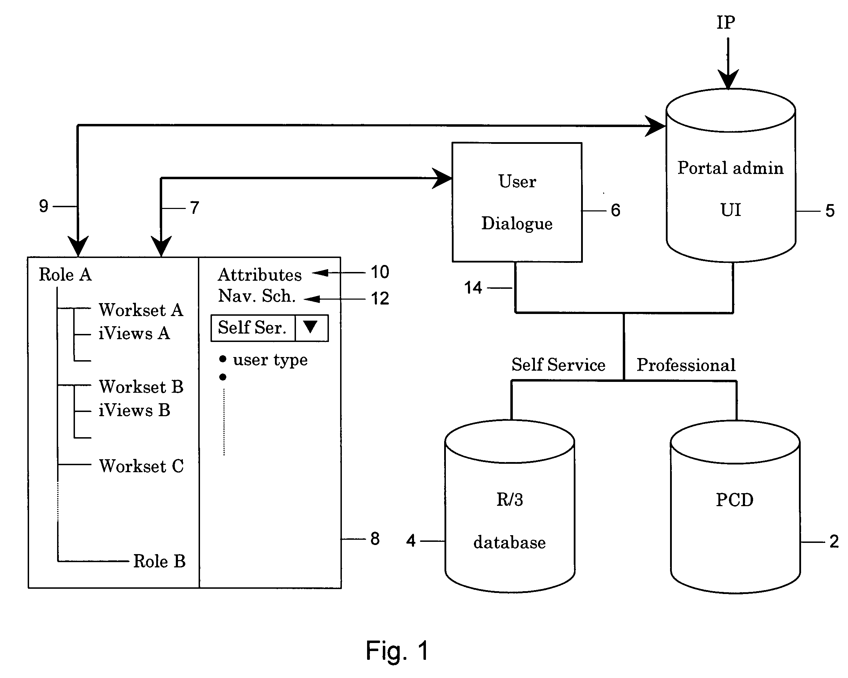

Figure 1 shows a block diagram of a computer based system for navigating within a portal application according to an embodiment of the invention. A portal application may be any application in which one or more roles are defined, for example, Role A, Role B, etc. Portal applications include, but are not limited to, applications included in MySAP. A role may be defined in terms of one or more attributes. Attributes may include, but are not limited to, a user type, a navigation scheme to be assigned to the role, etc. The one of the plurality of navigation schemes is an attribute of the role. The navigation scheme guides a user within the application. A plurality of navigation schemes may be defined. One navigation scheme is assigned to a particular role. Navigation schemes include, but are not limited to, a professional navigation scheme and a self-service navigation scheme. The professional navigation scheme has its focus on efficiency. Typically, screens are more complex than for self-service users. The self-service navigation scheme has its focus on user guidance, documentation and simplicity. Typically, screens are less complex than for the professional users. In the embodiment shown in Figure 1, a self-service navigation scheme and a professional navigation scheme are provided. The professional navigation scheme is stored in a data storage device 2. The data storage device 2 may be a portal content directory (PCD). When the application runs, the professional navigation scheme is carried out in accordance with the data stored in the PCD 2. The self-service navigation scheme is stored in a data storage device 4. The data storage device 4 may be an R/3 database, or the like. When the application runs, the self-service navigation scheme is carried out in accordance with the data stored in the R/3 database. In the embodiment shown, the plurality of navigation schemes are stored in their respective data storage devices. In an alternative embodiment, one or more of the navigation schemes may be stored in the same data storage device. A user interface 5, for example, a portal administration user interface, for example, SAP Enterprise Portal 6.0, allows a user to interface certain aspects of the application. In particular, the user interface allows a user to interface with the navigation scheme, and in particular, to switch from one navigation scheme to another navigation scheme. In one embodiment, the user may have access 7 to the navigation scheme switch. Alternatively, or in addition, the portal administration may have access 9 to the navigation scheme switch. The user interface 5 is configured to receive an input IP from a user. The input may be received via a key board, screen, pointing device or other input device. Via the user interface 5 the user is able to switch navigation schemes. The one or more roles are defined, such as Role A and

Role B. A definition of the one or more roles are shown in a graphical form in the screen shot 8. In particular, the role may have an attribute defining a user type and the navigation scheme is determined in accordance with the user type. The roles may be stored in a data base (not shown). One of the plurality of navigation schemes is provided as a default. In the embodiment shown, the user is presently a user associated with Role A which has as a self-service navigation scheme assigned as its default. When an input from a user is received, for example, to switch from the self-service navigation scheme to a professional navigation scheme, or vice versa, a user dialogue software 6 causes the attribute 10 of the navigation scheme 12 to switch from self-service to professional. The output 14 from the user dialogue 6 is coupled to the navigation scheme databases 2, 4, so that the user interface 5 is provided with the appropriate navigation scheme. In other words, the output from the user dialogue switches from one navigation scheme to another. The user can cause the switch by, for example, clicking on a link in one of his navigation screen, as described in more detail hereinbelow. Alternatively, or in addition, if the user has a role, for example, Role A, with which administrator rights are assigned, using the user dialogue 6, he can access screen 8. The user is then able to view a particular role using user dialogue 6. Using user dialog, a user is provided with a screen 8 in which one or more roles can be viewed and edited. The user can then change directly, the navigation scheme assigned to a particular role. Again, the output of the user dialogue 6 causes the navigation scheme to switch. The switching may be carried out as a generic function. A generic function may mean: first, the functionality in general may not be limited to certain roles; second, if the user or administration switches the navigation scheme, there may be an option to do that for all roles at once or for one or more selected roles. In case of a user this may mean: if it may be assumed that the user has three roles assigned and he switches from occasional to professional, there may be the possibility to switch all three roles for this user at once. In case of an administration, this may mean that he may be able to switch all roles used in the company at once or at least have a multiple selection option. In one embodiment, the switching may be carried out by one or more users assigned to one or more roles, respectively. In another embodiment, the switching may be carried out for a plurality of roles or one or more selected roles.

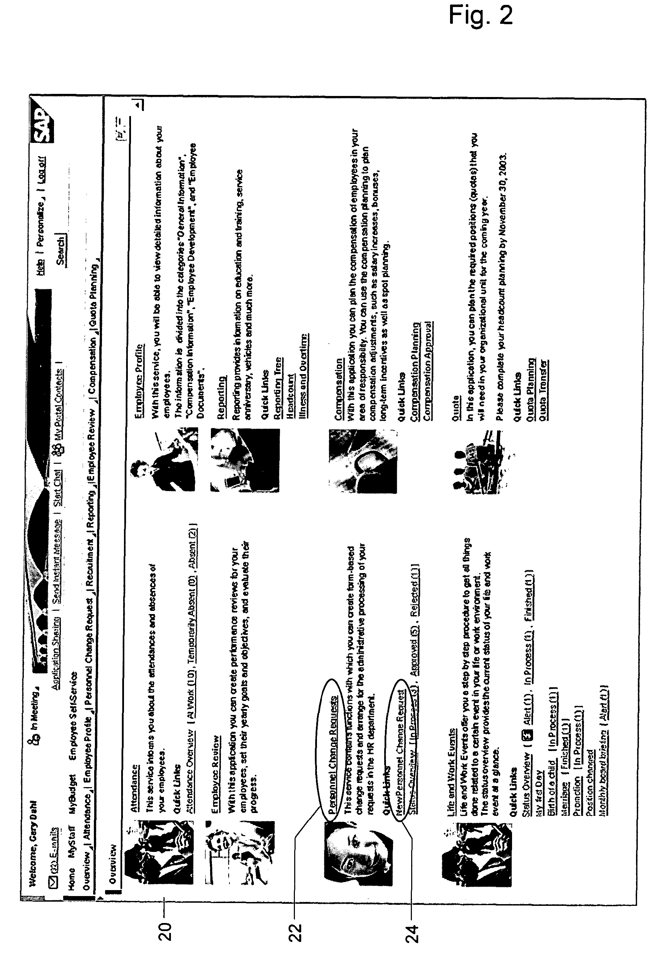

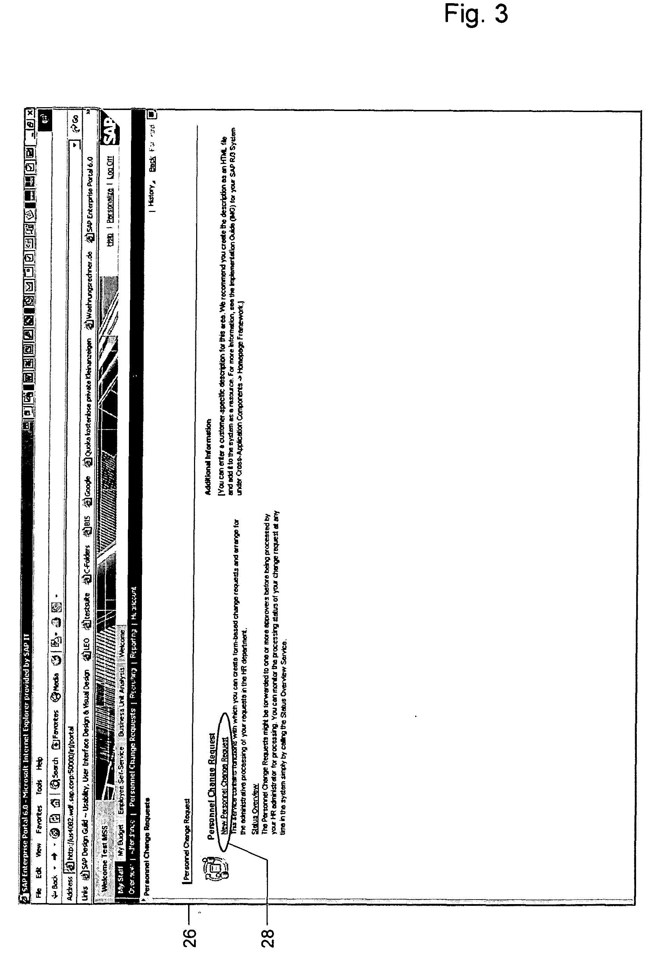

Figure 2 depicts a screen shot of a home page of a self-service navigation scheme according to an embodiment of the invention. In particular, Figure 2 shows a level one home page 20 (overview page) for a self-service navigation scheme. It can be seen that the home page has low screen complexity, user guidance and documentation. For example, by clicking on the Personnel Change Requests link 22, a user is led to a second level home page, as shown in Figure 3. Further, by clicking on quick link, New Personnel Change Request 24, the user is led directly to a service, i.e. a short cut is provided.

Figure 3 depicts a screen shot of a second level home page 26 of a self-service navigation scheme according to an embodiment of the invention. In particular, the screen shot shown in Figure 3 is screen reached if the user clicks on the Personnel Change Requests link 22 in Figure 2. In the self-service navigation scheme, by clicking on the link New Personnel Change Request 28, the user is led to the service. In other words, in the self-service navigation scheme, a user can access the service New Personnel Change Request directly by clicking on the shortcut 24 on the homepage 20 or by being guided by the navigation scheme to the service via the second level homepage 26.

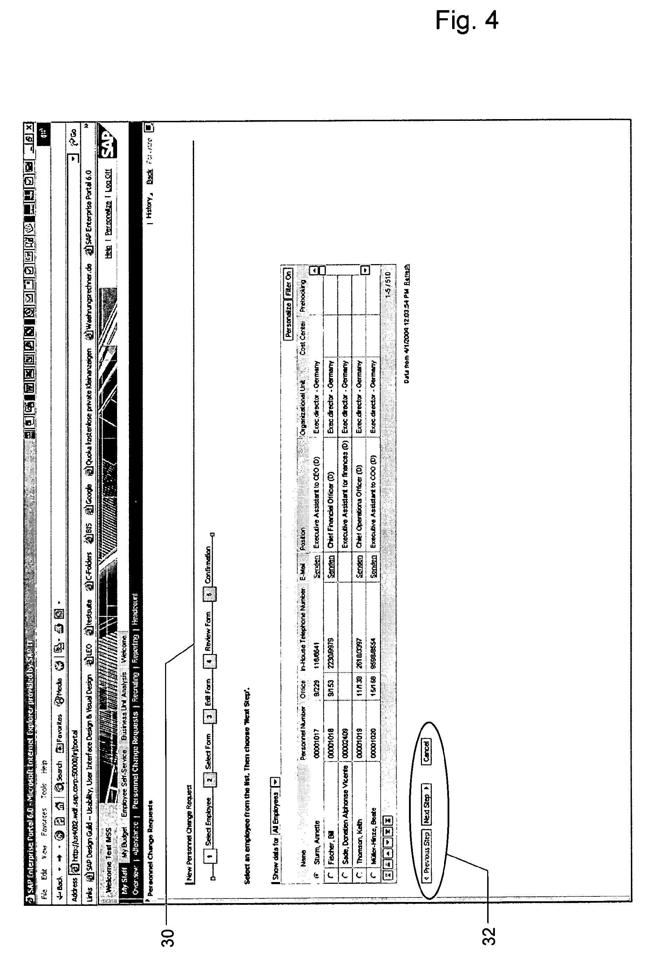

Figure 4 depicts a screen shot of a service launch in accordance with a self-service navigation scheme according to an embodiment of the invention. In particular, Figure 4 depicts the launch of the service, New Personnel Change Request, activated in Figures 2 and 3. It can be seen that in the self-service navigation, guidance if provided in the form of a road map 30, which gives the user an overview of the steps involved in carrying out the service. In particular, it is seen that steps involved in the service New Personnel Change Request include select employee, select form, edit form, review form and confirmation. The user is further guided through the steps by navigation buttons 32.

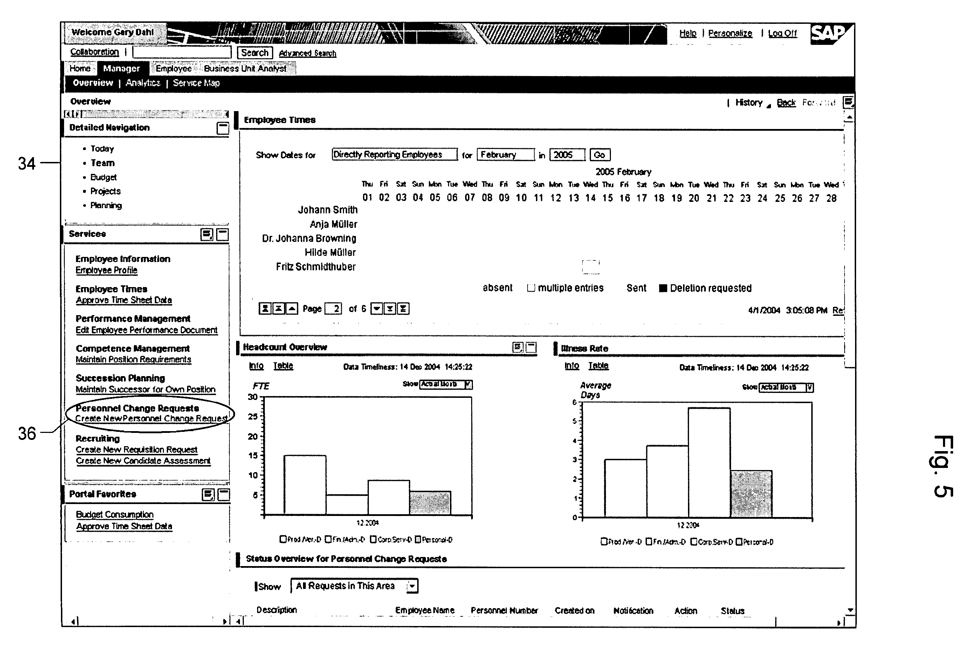

Figure 5 depicts a screen shot of a home page 34 of a professional navigation scheme according to an embodiment of the invention. In contrast to the navigation scheme depicted in Figures 2 to 4, it is seen that in the professional navigation scheme there is a higher screen complexity, less user guidance and less documentation. From the home page 34, the user can directly launch the service create new personnel change request by clicking on the link 36 on the home page 34.

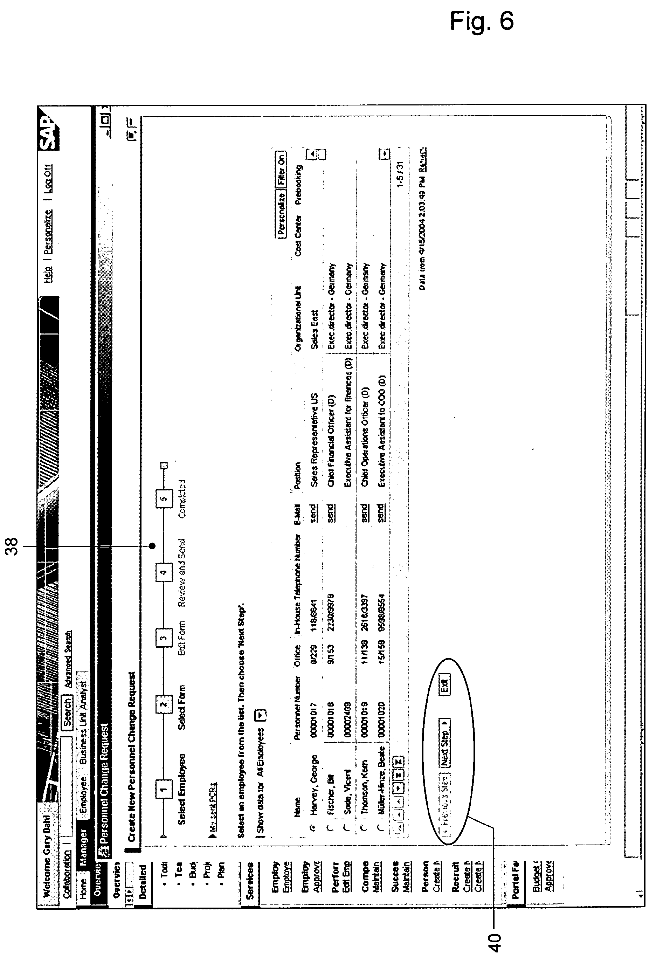

Figure 6 depicts a screen shot of a service launch in accordance with a professional navigation scheme according to an embodiment of the invention. In particular, Figure 6 shows the screen which is launched by clicking on link 36 in Figure 5. It can be seen that guidance may be provided as a road map 38. The service shown in Figure 6 includes the steps of select employee, select form, edit form, review and send and completed. The user may further be guided through the steps by navigation buttons 40.

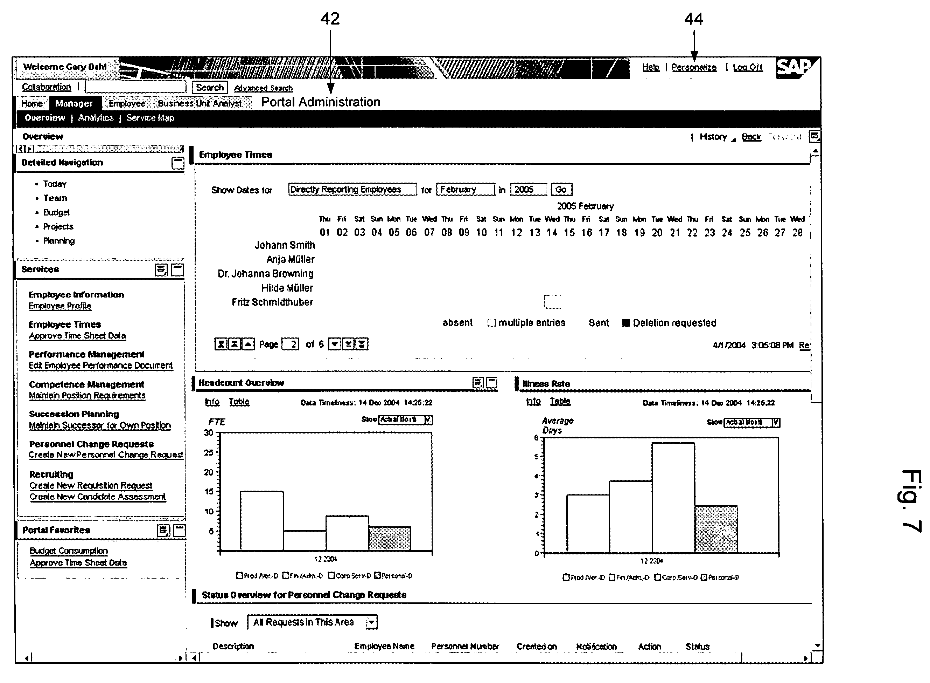

Figure 7 depicts a screen shot indicating how a user can switch between navigation schemes in accordance with an embodiment of the invention. In particular, as described above, if the user is associated with a role having administrator rights, he may switch navigation schemes via the portal administration. This is achieved by clicking on the portal administration link 42. Alternatively, any user associated with any role can switch roles by clicking on the Personalize link 44. As described, the switch is possible on two levels: the switch may be user independent and role specific set by the Portal Administrator in the portal administration tools, which includes the portal administration user interface 5. Alternatively, the switch may be user dependent and role specific set by a user via the portal personalization dialogue.

It should be noted that the above-mentioned embodiments illustrate rather than limit the invention, and that those skilled in the art will be able to design alternatives without departing from the scope of the appended claims. For example, the computational aspects described here can be implemented in digital electronic circuitry, or in computer hardware, firmware, software, or in combinations of them. Where appropriate, aspects of these systems and techniques can be implemented in a computer program product tangibly embodied in a machine-readable storage device for execution by a programmable processor, and method steps can be performed by a programmable processor executing a program of instructions to perform functions by operating on input data and generating output. The mere fact that certain measures are recited in mutually different claims does not indicate that a combination of these measures cannot be used to advantage.

## Claims

1. A method of navigating within a portal application, the portal application having one or more defined roles, wherein the one or more roles have one of a plurality of navigation schemes assigned to the role, wherein the navigation scheme navigates a user within the application in accordance with the assigned navigation scheme, the method comprising: interfacing with a user to receive an input from the user, and switching, in response to the input from the user, from the one of the plurality of navigation schemes to another of the plurality of navigation schemes, so that the user is able to determine the navigation scheme to navigate within the application.

2. A method according to claim 1, wherein the role has an attribute defining a user type determined and the navigation scheme is determined in accordance with the user type.

3. A method according to claim 1 or claim 2, wherein the one of the plurality of navigation schemes is provided as a default.

4. A method according to any of the preceding claims, wherein switching is carried out as a generic function.

5. A method according to claim 4, wherein the switching may be carried out by one or more users assigned to one or more roles, respectively.

6. A method according to claim 4, wherein the switching may be carried out for a plurality of roles or one or more selected roles.

7. A method according to any of the preceding claims, wherein the one of the plurality of navigation schemes is an attribute of the role.

8. A method according to claim 7, including storing the attribute in a data storage system.

9. A method according to any of the preceding claims, wherein the one of the plurality of navigation schemes is a professional user navigation scheme or a self-service navigation scheme.

10. A system for navigation within a portal application, the portal application having one or more defined roles, wherein the one or more roles have one of a plurality of navigation schemes assigned to the role, wherein the navigation scheme navigates a user within the application in accordance with the assigned navigation scheme, the system comprising:
a data storage device for storing the one or more roles together with the one of a plurality of navigation schemes assigned to the role,
a user interface coupled to the data storage unit, configured to respond to an input from a user to switch from the one of the plurality of navigation schemes to another of the plurality of navigation schemes, so that the user is able to determine the navigation scheme to navigate within the application.

11. A system according to claim 10, further comprising a plurality of data storage devices for storing the plurality of navigation schemes, respectively.

12. A user terminal comprising means operable to perform the method of claims 1-9.

13. A computer readable storage medium storing a program which when run on a computer controls the computer to perform the method of claims 1-9.
